# EUROPÄISCHE PATENTSCHRIFT

(11) **EP 1 578 296 B1**
(45) Veröffentlichungstag und Bekanntmachung des Hinweises auf die Patenterteilung: **21.12.2011**
(21) Anmeldenummer: 03799509.9
(22) Anmeldetag: 27.12.2003
(51) Int. Cl.: A61C 3/14

(54) **VORRICHTUNG ZUR EXTRAKTION EINER ZAHNWURZEL**
ROOT EXTRACTION DEVICE
DISPOSITIF PERMETTANT D'EXTRAIRE UNE RACINE DENTAIRE

(30) Priorität: 03.01.2003 CH 42003
(43) Veröffentlichungstag der Anmeldung: 28.09.2005
(73) Patentinhaber: Syfrig, Benno, 6003 Luzern (CH)
(72) Erfinder: Syfrig, Benno, 6003 Luzern (CH)
(74) Vertreter: Luchs, Willi
(86) Internationale Anmeldenummer: PCT/EP2003/014923
(87) Internationale Veröffentlichungsnummer: WO 2004/060191

(56) Entgegenhaltungen:
- DE-A- 10 136 762
- FR-A- 735 071
- US-A- 4 443 196

## Beschreibung

Die Erfindung betrifft eine Vorrichtung zur Extraktion einer Zahnwurzel gemäss dem Oberbegriff des Anspruches 1.

In der Dentaltechnik ist es üblich, dass beim Ziehen eines Zahnes in der Regel nach der örtlichen Betäubung zuerst die Zahnwurzel im Zahnfleisch mit einem in den Parodontalspalt gedrängten Werkzeug etwas gelockert und danach der Zahn samt Zahnwurzel mittels einer Zange gezogen wird. Problematisch wird es, wenn es sich beispielsweise um einen abgebrochenen oder mit einer Krone versehenen Zahn handelt, bei dem für die Zange praktisch keine greifbare Fläche zur Verfügung steht, und die Zahnwurzel allein entfernt werden muss.

Die Druckschrift DE-A-101 36 762 offenbart eine Vorrichtung gemäß dem Oberbegriff des Anspruchs 1 zum Entfernen von Zähnen und/oder Zahnwurzeln mit einem Ziehgerät, welches mindestens einem sich in der Mundhöhle oder auf dem Kieferdamm abstützbaren, mit mindestens eine Öffnung aufweisenden Widerlager und einem in den Zahn eingeschraubten und mit zwei Gewinde versehen Ziehteil aufweist. Bei der mit einer Drehbewegung der Zahn entfernt wird.

Eine weitere Druckschrift US-B-4 443 196 beschreibt einen Zahnwurzel entferner aus einem mit zwei Armen bestehenden Bügel, welcher eine in die Zahnwurzel eingeschraubtes Ziehelement mit Hilfe einer im Winkel liegenden Druckschraube heraus zieht.

Die Druckschrift FR-A-735 071 offenbart einen Arm der am ersten Ende über eine Achse beweglich auf einer Stützte befestigt ist und einen an einem Ziehelement anhängbaren Hacken zwischen beiden Enden aufweist. Das Ziehelement wird mit einer Kraft an dem zweiten Ende und einer Damit verbunden Drehbewegung über die andere Achse heraus gezogen.

Der vorliegenden Erfindung liegt die Aufgabe zugrunde eine Vorrichtung zur einfachen Entfernung einer Zahnwurzel vorzuschlagen.

Diese Aufgabe wird erfindungsgemäss durch eine Vorrichtung mit den Merkmalen des Anspruches 1 gelöst.

Weitere bevorzugte Ausgestaltungen des erfindungsgemüssen Verfahrens sowie der erfindungsgemässen Vorrichtung bilden den Gegenstand der abhängigen Ansprüche.

Dadurch, dass zum Wurzelziehen ein Stift in die Zahnwurzel eingefügt und dort befestigt wird, wonach ein mit einem manuell betätigbaren Spanngerät wirkverbundenes Zugelement in den Stift eingeführt wird, und anschliessend mittels des in den Mund teilweise eingeführten und dort abgestützten Spanngerätes die zum Wurzelziehen notwendige Zugkraft erzeugt und auf die Zahnwurzel im wesentlichen in ihrer Achsrichtung ausgeübt wird, kann eine relativ grosse Zugkraft ohne grossen Kraftaufwand auf die Zahnwurzel ausgeübt werden, ohne dass Platzprobleme und eventuelle Verletzungsgefahr im Mund entstehen. Die erfindungsgemässe Vorrichtung ist einfach und kostengünstig und ermöglicht eine einfache Handhabung.

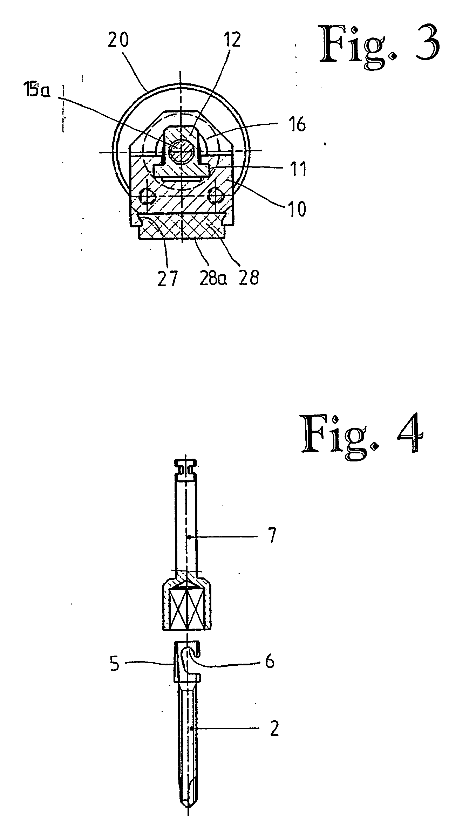

- Fig. 4: einen Gewindestift als Teil der erfindungsgemässen Vorrichtung mit einem Gegenstück zum Einschrauben des Gewindestiftes in die Zahnwurzel.

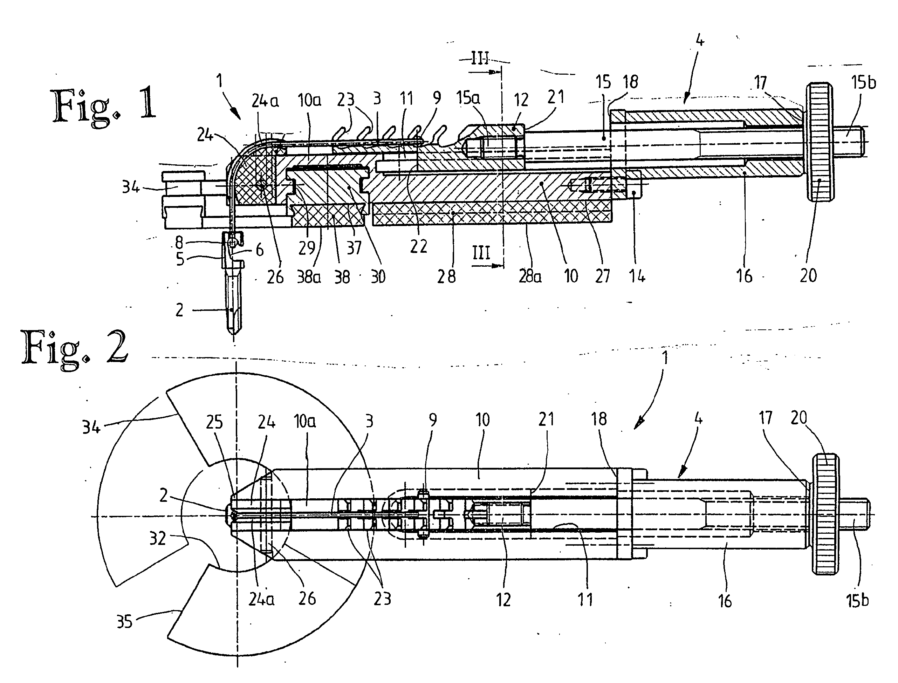

Fig.1 zeigt eine Vorrichtung 1 zur Extraktion einer Zahnwurzel, die einen in die Zahnwurzel einfügbaren und dort befestigbaren Stift 2, ein in den Stift 2 einführbares Zugelement 3 und ein mit dem Zugelement 3 wirkverbundenes Spanngerät 4 umfasst.

Der Stift 2 ist beim dargestellten Ausführungsbeispiel als ein Gewindestift ausgebildet, der in die Zahnwurzel vorzugsweise in ihrer Achsrichtung eingeschraubt wird. Allerdings wären auch andere Befestigungsarten des Stiftes 2 in der Zahnwurzel denkbar (z.B. könnte es sich um eine Zement-oder Klebverbindung oder um einen Spreizstift handeln), und auch das Einfügen in der Achsrichtung der Zahnwurzel ist manchmal nicht oder nicht mehr möglich, beispielsweise wenn es sich um eine gekrümmte oder bereits mit einer oder zwei Schrauben zum Anbringen einer Krone versehene Zahnwurzel handelt.

Der Stift 2 ist mit einem Kopf 5 versehen, der mit einer hakenförmigen Ausnehmung 6 ausgestattet ist. Wie in Fig. 4 angedeutet, weist der Kopf 5 mit Vorteil eine derartige Aussenform (Vierkant) auf, dass zum Einschrauben in die Zahnwurzel ein standardisierter, auf den Kopf 5 aufsteckbarer Adapter 7 verwendet werden kann.

In die hakenförmige Ausnehmung 6 ist das bereits erwähnte Zugelement 3 mit einem Querstift 8 eingehakt. Das Zugelement 3 kann z.B. als ein Draht, eine Saite oder ein Seil ausgebildet sein. Auch am anderen Ende des Zugelementes 3 ist ein Querstift 9 vorhanden, mit dem das Zugelement 3 am Spanngerät 4 angebracht wird, wie noch weiter unten näher erwähnt.

Das Spanngerät 4 umfasst einen langgestreckten Grundkörper 10, der eine im Querschnitt T-förmige Führungsnut 11 für einen gegenüber dem Grundkörper 10 längsverstellbaren Spannsupport 12 aufweist. In den Spannsupport 12 ist ein sich in Längsrichtung erstreckender Gewindebolzen 15 mit einem vorderen Ende 15a eingeschraubt, dessen hinterer Gewindeteil 15b durch eine am hinteren Ende des Grundkörpers 10 mittels Schrauben 14 angeschraubte Stützhülse 16 hindurch geführt wird. Dem Gewindeteil 15b ist eine Rändelmutter 20 zugeordnet, die an einer hinteren Stirnfläche 17 der Stützhülse 16 abstützbar ist. Der Spannsupport 12 ist in seiner Längsrichtung mit einer hinteren Fläche 21 an einer vorderen Stirnfläche 18 der Stützhülse 16 einerseits und mit einer nach vorne gerichteten Fläche 22 an einem vorderen Grundkörperteil 10a anderseits abstützbar.

Der Spannsupport 12 ist mit einer Anzahl von in Längsrichtung hintereinander angeordneten, hakenförmigen Ausnehmungen 23 versehen, in welche das Zugelement 3 mit dem Querstift 9 einhängbar ist. Am vorderen Grundkörperteil 10a ist ein Umlenkteil 24 für das Zugelement 3 angebracht, auf welchem das einerseits zum Stift 3 im wesentlichen in Achsrichtung der Zahnwurzel geführte und anderseits rechtwinklig dazu in Längsrichtung des Spanngerätes 4 gespannte Zugelement 3 aufliegt. Der Umlenkteil 24 ist als ein ortsfester, im Querschnitt eine Führungsnut 24a für das Zugelement 3 bildender Scheibensegment ausgebildet, der in einem stirnseitigen, gabelförmigen Teil 25 des vorderen Grundkörperteils 10a mittels eines Querstiftes 26 befestigt ist.

Auf der der Führungsnut 11 für den Spannsupport 12 abgewandten Seite ist der Grundkörper 10 mit einer im Querschnitt schwalbenschwanzförmigen Nut 27 (vgl. insbesondere Fig. 3) ausgestattet, in die eine Abstützplatte 28 aus Kunststoff eingesetzt ist. Im vorderen Grundkörperteil 10a ist zudem auf der gleichen Seite des Grundkörpers 10 eine aus Fig. 1 ersichtliche Nut 29 für ein Drehsegment 30 angefertigt, dessen Achse quer zur Verschieberichtung des Spannsupports 12 verläuft und welches von der Seite in die Nut 29 einführbar ist, wobei die Nut 29 die Führungsflächen sowohl für eine äussere als auch für eine innere Umfangsfläche 31, 32 des Drehsegmentes 30 bildet. Die Nut 29 ist dabei so im vorderen Grundkörperteil 10a plaziert, dass das zum Stift 2 hin gelenkte Zugelement 3 koaxial zum Drehsegment 30 verläuft. Das Drehsegment 30 bildet einen durch Flächen 34, 35 begrenzten Ausschnitt, dessen Ausrichtung durch Verdrehen des Drehsegmentes 30 geändert bzw. eingestellt werden kann. Das Drehsegment 30 ist - ähnlich wie der Grundkörper 10 mit der Abstützplatte 28 - mit einer Abstützscheibe 38 aus Kunststoff ausgestattet, die in eine im Querschnitt schwalbenschwanzförmigen Nut 37 des Drehsegmentes 30 eingesetzt ist (Fig. 1). Die Abstützplatte 28 und die Abstützscheibe 38 bilden je eine Auflagefläche 28a, 38a, mittels welcher das Spanngerät 4 im Mund abstützbar ist.

Soll eine Zahnwurzel entfernt werden, so wird zuerst der Stift 2 in die Zahnwurzel eingefügt und dort befestigt, vorzugsweise eingeschraubt. Danach wird das Zugelement 3 mit einem Ende in den Stift 2 eingeführt, beispielsweise mit dem Querstift 8 in die Ausnehmung 6 eingehakt, und mit dem anderen Ende am in den Mund teilweise eingeführten und dort abgestützen Spanngerät 4 angebracht. Dabei wird durch die Wahl einer geeigneten Ausnehmung 23 zum Einhaken des anderen Querstiftes 9 die Position der zu behandelnden Stelle im Mund bzw. die Distanz zwischen dem Abstützpunkt des Spanngerätes im Mund und der zu ziehenden Wurzel berücksichtigt und eine geeignete Vorspannung des Zugelementes 3 erzeugt. Aber auch die Stellung des Spannsupports 12 zwischen dem vorderen Grundkörperteil 10a und der vorderen Stirnfläche 18 der Stützhülse 16 als Ausgangsstellung vor der Erzeugung der eigentlichen Zugkraft zum Wurzelziehen kann rasch durch axiales Verstellen der Rändelmutter 20 auf dem Gewindeteil 15b eingestellt werden. Bei einem mit der hinteren Fläche 21 an der vorderen Stirnfläche 18 der Stützhülse 16 anliegenden Spannsupport 12 bestimmt die axiale Distanz der Rändelmutter 20 von der hinteren Stirnfläche 17 der Stützhülse 16 den Weg, um welchen der Spannsupport 12 in Längsrichtung rasch bewegt werden kann, ohne dass die Rändelmutter 20 gedreht wird. Die eigentliche Zugkraft zum Wurzelziehen wird dann bei einer an der hinteren Stirnfläche 17 der Stützhülse 16 anliegenden Rändelmutter 20 durch Verdrehen derselben und daraus folgenden langsamen Gewindeteil- bzw. Spannsupport-Verstellung erzeugt. Von Vorteil ist dabei, dass über das Gewinde eine relativ grosse Zugkraft ohne grossen Kraftaufwand erzeugt werden kann. Zudem kann durch die Umlenkung des Zugelementes 3 und die rechtwinklige Anordnung des Spannsupports 12 zum in der Zahnwurzel befestigten Stift 2 die Zahnwurzel im wesentlichen in ihrer Achsrichtung gezogen werden, ohne dass Platzprobleme und eventuelle Verletzungsgefahr im Mund entstehen.

Die Abstützung des Spanngerätes 4 erfolgt über die Auflagefläche 28a der Abstützplatte 28 (am Mundrand) und über die Auflagefläche 38a der am Drehsegment 30 angebrachten Abstützscheibe 38 (bei der zu behandelnden Stelle). Das verdrehbare Drehsegment 30 kann dabei den jeweiligen Platzverhältnissen um die zu behandelnde Stelle entsprechend eingestellt werden, um eine optimale Abstützung zu gewährleisten.

Die bereits erwähnte rasche Verstellung des Spannsupports 12, die in ihrer maximalen Grösse durch die Anschläge des Spannsupports 12 an der Stützhülse 16 einerseits und am vorderen Grundkörperteil 10a anderseits begrenzt ist und durch verstellen der Rädelmutter 20 in ihrer Grösse eigestellt bzw. reduziert werden kann, kann auch zur Vorbehandlung bzw. Lockerung der Zahnwurzel ausgenutzt werden, indem vor der Erzeugung der eigentlichen Zugkraft durch Hin-und Herbewegung des Spannsupports eine zuckartige Einwirkung auf die Zahnwurzel ausgeübt wird. Selbstverständlich kann aber auch bei Bedarf eine Lockerung im Parodontalspalt mittels eines dazu geeigneten Werkzeuges in an sich bekannten Weise vorgenommen werden.

Die erfindungsgemässe Vorrichtung ist einfach und kostengünstig und ermöglicht eine einfache Handhabung. Der Grundkörper 10 des Spanngerätes 4 kann zum Beispiel mit dem Daumen und dem Mittelfinger einer Hand ergriffen werden, wobei mit dem Zeigefinger das Aufliegen des Zugelementes auf dem Umlenkteil 24 unterstützt werden kann, und die Rändelmutter 20 mit der anderen Hand betätigt wird. Im Prinzip könnte die Zugkraft auch maschinell erfolgen.

Es können Mittel vorgesehen sein, welche beim Drehen der Rändelmutter 20 ein ruckartiges Ziehen des Zugelementes 3 bewirken, beispielsweise indem die Stirnfläche 17 der Stützhülse 16 und die an dieser anliegende Rändelmutter 20 mit korrespondierenden radial sich erstreckenden Sägezähnen oder dergleichen ausgebildet sind. Beim Drehen der Rändelmutter entsteht daher über einen gewissen Winkel eine zusätzliche Steigung, welche nachfolgend wieder zurückgeht.

## Patentansprüche

1. Vorrichtung zur Extraktion einer Zahnwurzel bei welcher einen in die Zahnwurzel einfügbaren und dort befestigbaren Stift (2), ein in den Stift (2) einführbares Zugelement (3) und ein mit dem Zugelement (3) wirkverbundenes, in den Mund teilweise einführbares und dort abstützbares Spanngerät (4) zur Erzeugung der zum Wurzelziehen notwendigen Zugkraft, **dadurch gekennzeichnet, dass** das Spanngerät (4) einen langgestreckten Grundkörper (10) und einen gegenüber dem Grundköper (10) längsverstellbaren, mit dem Zugelement (3) wirkverbundenen Spannsupport (12) aufweist, wobei das zwischen dem Stift (3) und dem Spannsupport (12) gespannte Zugelement (3) auf einem mit dem Grundkörper (10) verbundenen Umlenkteil (24) aufliegt.

2. Vorrichtung nach Anspruch 1, **dadurch gekennzeichnet, dass** der Spannsupport (12) mit einem längsgerichteten Gewindebolzen (15) versehen ist, der durch eine am Grundkörper (10) befestigte Stützhülse (16) hindurchragt und an welchem eine auf der Stützhülse (16) axial abstützbare Rändelmutter (20) angeordnet ist, über welche der mit dem Spannsupport (12) verbundene Gewindebolzen (15) bei der axial abgestützten Rändelmutter (20) längsverstellbar ist.

3. Vorrichtung nach einem der Ansprüche 1 bis 2, **dadurch gekennzeichnet, dass** das Zugelement (3) als ein Draht, ein Seil oder eine Saite ausgebildet ist, wobei Mittel (8, 9) zum Einhaken des Zugelementes (3) in je eine hakenförmige Ausnehmung (6, 23) des Stiftes (2) einerseits und des längsverstellbaren Spannsupports (12) anderseits vorgesehen sind.

4. Vorrichtung nach Anspruch 2, **dadurch gekennzeichnet, dass** der Spannsupport (12) mehrere in Längsrichtung hintereinander angeordnete, hakenförmigen Ausnehmungen (23) zum wahlweisen Einhaken des Zugelementes (3) aufweist.

5. Vorrichtung nach einem der Ansprüche 1 bis 4, **dadurch gekennzeichnet, dass** der Spannsupport (12) in Längsrichtung zwischen einem vorderen Grundkörperteil (10a) und einer vorderen Stirnfläche (18) der Stützhülse (16) verstellbar ist, wobei die Grösse seiner Verstellung über die an einer hinteren Stirnfläche (17) der Stützhülse (16) abstützbare Rändelmutter (20) einstellbar ist.

6. Vorrichtung nach einem der Ansprüche 1 bis 5, **dadurch gekennzeichnet, dass** im Grundkörper (10) ein Drehsegment (30) drehbar angeordnet ist, dessen Achse quer zur Verschieberichtung des Spannsupports (12) verläuft und welches das zum Stift (2) hin gelenkte Zugelement (3) umgibt, wobei sowohl der Grundkörper (10) als auch das Drehsegment (30) mit je einer Auflagefläche (28a, 38a) zur Abstützung im Mund versehen ist.

## Claims

1. Device for extracting a tooth root with a pin (2) that can be inserted into the tooth root and affixed there, a pulling element (3) to be inserted into the pin (2), and a actuated tensioning device (4) functionally linked with the pulling element (3), to be partially inserted into the mouth and supported there, for creating the pulling force required for extracting the root, **characterised in that** the tensioning device (4) incorporates a stretched base body (10) and a tensioning support (12) functionally linked with the pulling element (3), the same being longitudinally adjustable in relation to the base body (10), whereby the pulling element (3) tensioned between the pin (3) and the tensioning support (12) rests upon a diverting part (24) connected with the base body (10).

2. Device according to Claim 1, **characterised in that** the tensioning support (12) is equipped with a longitudinally orientated threaded bold (15), which projects through a support sleeve (16) affixed to the base body (10), and on which a ribbed nut (20) axially supported on the support sleeve (16) is located, by means of which the threaded bold (15) connected with the tensioning support (12) is longitudinally adjustable with the axially supported rubbed nut (20).

3. Device according to Claim 1 to 2, **characterised in that** the pulling element (3) takes the form of a wire, a rope, or a string, whereby means (8, 9) for hooking up the pulling element (3) into a hook-shaped recess (6, 23) of the pin (2) on the one hand, and the longitudinally adjustable tensioning support (12) on the other hand are envisaged.

4. Device according to Claim 2, **characterised in that** the tensioning support (12) incorporates several hook-shaped recesses (23) positioned behind each other in a longitudinal direction for selective hooking-up of the pulling element (3).

5. Device according to one of the Claims 1 to 4, **characterised in that** the tensioning support (12) is adjustable in a longitudinal direction between a front base body section (10a) and a front facing surface (18) of the supporting sleeve (16), whereby the extent of its adjustment is adjustable by means of a ribbed nut (20) supported on a rear facing surface (17) of the supporting sleeve (16).

6. Device according to one of the Claims 1 to 5, **characterised in that** a rotating segment (30) is rotatable positioned in the base body (10), the axis of which extends diagonally in relation to the displacement direction of the tensioning support (12), and which surrounds the pulling element (3) facing the pin (2), whereby the base body (10) as well as the rotating segment (30) are each equipped with a support surface (28a, 38a) for supporting the same in the mouth.

## Revendications

1. Dispositif d'extraction d'une racine dentaire, dans lequel l'on trouve une tige (2), qui peut être insérée dans la racine dentaire et y être fixée, un élément de traction (3), qui peut être introduit dans la tige (2), et un appareil de serrage (4) qui, en rapport fonctionnel avec l'élément de traction (3), peut être en partie introduit dans la bouche et y prendre appui pour générer la force de traction nécessaire à l'extraction de la racine, **caractérisé en ce que** l'appareil de serrage (4) présente un corps de base allongé (10) et un support de serrage (12), qui peut être positionné dans le sens longitudinal par rapport au corps de base (10) et est en rapport fonctionnel avec l'élément de traction (3), dans lequel l'élément de traction (3), serré entre la tige (3) et le support de serrage (12), s'appuie sur une partie de déviation (24) reliée au corps de base (10).

2. Dispositif selon la revendication 1, **caractérisé en ce que** le support de serrage (12) est pourvu d'un boulon fileté orienté dans le sens longitudinal (15), qui passe à travers une douille d'appui (16), fixée au corps de base, (10) et en dépasse, et sur lequel support est disposé un écrou moleté (20) qui peut s'appuyer axialement sur la douille d'appui (16), le boulon fileté (15) relié au support de serrage (12) pouvant se positionner dans le sens longitudinal au niveau de l'écrou moleté appuyé axialement.

3. Dispositif selon l'une quelconque des revendications 1 et 2, **caractérisé en ce que** l'élément de traction (3) se présente sous la forme d'un fil métallique, d'une corde ou d'un cordon, dans lequel des moyens (8, 9) sont prévus pour accrocher, d'une part, l'élément de traction (3) dans respectivement un évidement (6, 23) de la tige (2), en forme de crochet, et, d'autre part, le support de serrage (12) positionnable dans le sens longitudinal.

4. Dispositif selon la revendication 2, **caractérisé en ce que** le support de serrage (12) présente plusieurs évidements (23) en forme de crochet disposés, dans le sens longitudinal, l'un derrière l'autre pour, au choix, accrocher l'élément de traction (3).

5. Dispositif selon l'une quelconque des revendications 1 à 4, **caractérisé en ce que** le support de serrage (12) peut se déplacer, dans le sens longitudinal, entre une partie du corps de base avant (10a) et une surface frontale avant (18) de la douille d'appui (16), dans lequel l'ampleur de son positionnement est réglable par le biais de l'écrou moleté (20), qui peut s'appuyer sur une surface frontale arrière (17) de la douille d'appui (16).

6. Dispositif selon l'une quelconque des revendications 1 à 5, **caractérisé en ce que** dans le corps de base (10) est disposé, en rotation, un segment rotatif (30), dont l'axe suit un tracé transversal au sens de déplacement du support de serrage (12) et qui entoure l'élément de traction (3) orienté vers la tige (2), dans lequel aussi bien le corps de base (10) que le segment rotatif (30) sont pourvus respectivement d'une surface d'appui (28a, 28b) destinée à prendre appui dans la bouche.
